# EUROPEAN PATENT SPECIFICATION

(11) **EP 1 076 879 B1**
(45) Date of publication and mention of the grant of the patent: **17.04.2002**
(21) Application number: 98958830.6
(22) Date of filing: 07.12.1998
(51) Int. Cl.: G06K 11/18, G06F 3/06, G06F 3/033

(54) **A UNIT COMPRISING A CARD READ/WRITE DEVICE**
EINHEIT DIE EINE LESE-/SCHREIBE-VORRICHTUNG ENTHÄLT
UNITE COMPORTANT UN DISPOSITIF DE LECTURE/ECRITURE DE CARTES

(30) Priority: 15.05.1998 DK 18098
(43) Date of publication of application: 21.02.2001
(60) Divisional application: 01124628.7
(73) Proprietor: Scard Development Aps., 2635 Ishoj (DK)
(72) Inventor: DE JAEGER GOTFREDSEN, Bjarke, DK-2635 Ishoj (DK)
(74) Representative: Sigh, Erik
(86) International application number: DK9800531
(87) International publication number: WO9963481

(56) References cited:
- DE-U1- 29 717 368

## Description

The invention relates to a unit which comprises a card reader.

It is well-known to use a unit which comprises a card read/write device in connection with computers, so that the device when connected to a computer can transfer information between the computer and a card which is placed in the device.

It is noted that the term card reader is used as a generic term for card read/write devices, e.g. a SmartCard, in the following.

DE-U-297 17 368 discloses a computer mouse with a housing and an IC card read/write device located inside the housing.

It is known that a card reader may be incorporated in the keyboard of the computer. This solution, however, has the drawback that it is complicated and thereby expensive. This solution has the additional drawback that it is necessary to replace an already operating keyboard by a new keyboard when it is desired to extend an operating computer to also comprise a card reader, and that both keyboard and card reader have to be replaced if one of these parts fails.

This solution has the additional drawback that the user's freedom in the selection of keyboard is limited. The reason is that a user who wants the keyboard to contain a card reader will be forced to select such a one and can be forced to refrain from making further demands on his keyboard. These demands might e.g. be the wish for a special ergonomic design of it.

A card reader may also be incorporated in a separate unit which may be connected to the computer. This solution, however, has the serious drawback that, in addition to being relatively expensive, it also means that extra space is occupied around the computer. Thus, it will frequently involve difficulty in having an extra unit connected while fulfilling the wish for giving it a central position so as to obtain easy access to the card reader.

Additionally, it is possible to incorporate the card reader in the cabinet of the computer itself. This, however, requires mounting by a skilled person, which impedes the installation of a card reader in a computer for a user. The card reader will also take up one of the limited number of slots which are present in the cabinet of the computer, and occupy a slot which can then not be used for the mounting of other units in the computer.

Accordingly, an object of the invention is to provide a unit of the type mentioned in the opening paragraph which obviates the drawbacks mentioned in the foregoing.

This is achieved according to the invention by the unit defined in claim 1.

The invention is based on that circumstance that it is well-known to use a mouse pad when using a mouse in connection with the use of a computer. The mouse pad is placed under the mouse to ensure that this operates as intended, by providing a desired friction between the ball of the mouse and the base on which the ball rests so that the ball rolls when the mouse is moved.

When the unit according to the invention is formed by a mouse pad, it is ensured inter alia that, in use, this will be placed at the mouse, and that the read/write unit thus has the desired central position relative to the computer, and that the other drawbacks of units having the prior art read/write device are obviated.

An expedient embodiment is defined in claim 2, said card read/write device being formed by a SmartCard unit.

The invention will now be described more fully below with reference to the drawing, in which
fig. 1 shows an embodiment of the technical structure of a unit according to the invention, and
fig. 2 shows an embodiment of a unit according to the invention.

The invention relates to devices capable of reading information from cards, devices capable of writing information on cards, as well as devices capable of performing both reading and writing of information on cards.

It is noted that the term card reader is used as a generic term for card read/write devices, e.g. a SmartCard, in the following. In the embodiment described, the card is a SmartCard and the card reader is thus a card reader for SmartCards. This unit is called SmartCard read/write unit in the following.

The unit, which is also called the product, the mouse pad and the ScardPad, respectively, in the following, has an incorporated SmartCard read/write unit. The ScardPad is connected to a PC by a cable (RS232 or USB). The upper side of the ScardPad is provided with advertising prints. It is noted that the ScardPad may be connected to the computer in several ways. For example, the connection may be carried out as a connection of the ScardPad via a serial port or via a parallel port in the computer. The connection may also conceivably be performed via a USB port, which is a special type of port that may be used for connecting a plurality of units (typically up to 63 units) to the computer. The connection between the computer and the ScardPad creates a link between the computer and the card reader in the ScardPad so that data may be transferred between the computer and a card which is placed in the card reader.

All PC users, who are to use SmartCards in future in connection with the use of various applications, such as e.g. home banking, Internet trade, encryption, etc., will need a SmartCard read/write unit in connection with their PC equipment. Today, the vast majority of PC users are Windows users, and they will therefore have to use a mouse in order to navigate in the applications. A ScardPad is therefore a must for a great part of the 92% of all PC users who today use Windows (stated by MicroSoft, Denmark).

A ScardPad is also one of the peripheral units which is not dependent on other parts of the PC user's configuration, and it is therefore not necessary to replace it when the PC is replaced.

But most importantly, the ScardPad is a unique "advertisement display pillar", and also so inexpensive that major companies and associations can use it as an advertising gift when new applications are to be introduced with the users. For example, when launching their CashCard, VISA could have included a ScardPad so that their users would immediately have been able to make cash purchases via the Internet without any security risks. As the introduction was made, the users interested in Internet trading themselves had to invest in one of the SmartCard read/write units which are commercially available - and these are relatively expensive.

The ScardPad is constructed like a conventional mouse pad, except that a SmartCard read/write unit is embedded (glued) in the foam rubber intermediate layer of the pad. The base has glued thereon a non-skid bottom face, and the top a layer on which the navigation ball of the mouse moves. This top layer is used for advertising (logos, text, pictures, etc.).

The ScardPad is connected to the PC by a cable on which a serial plug (Sub-D-RS232) is mounted. An adapter, e.g., may be supplied together with the pad so that the pad may be connected to a USB plug.

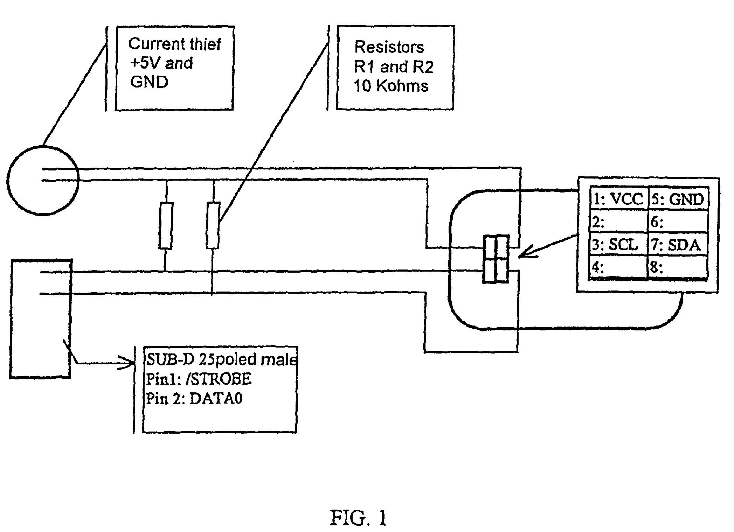

Fig. 1 shows an embodiment of a unit according to the invention which comprises
1 conventional mouse pad, 245 x 205 mm and min. 6 mm thick,
1 SmartCard Connector which complies with the specifications of ISO 7816 (the Connector is commercially available from Farnell among others - commodity number 7001PM020812A),
1 25-poled SUB-D male plug (Farnell commodity number CF25, 150-766),
1 keyboard "power thief". May be bought ready for use, alternatively be made of 2 PS2 keyboard plugs (male and female), with +5V and ground pulled out separately,
1 PCB printed circuit board having the dimensions (HxLxW) 1.6 x 70 x 58 mm, provided with print paths according to specifications, and
2 10 Kohms resistors (R1, R2). (Farnell commodity number 509-280).

The unit may be constructed in the following way:
Connect +5 Volts from
   SmartCard connection 1 (VCC)
   The power thief +5 Volts connection
   R1
   R2
Connect ground /GND from
   SmartCard connection 5 (GND)
   The power thief GND connection
Connect Clock from
   SUB-D plug pin 2 (DATAO)
   SmartCard connection 3 (SCL)
   R1
Connect Data from
   SUB-D plug pin 1 (C/STROBE)
   SmartCard connection 7 (SDA)
   R2

The unit may be connected to a PC (Personal Computer) or another type of computer in the following way:

The power thief is plugged into the keyboard plug in the PC.
The keyboard plug is plugged into the power thief.
The SUB-D plug is plugged into the printer port of the PC.
The read/write unit may be used for ordinary SmartCards with I²C communication (2-conductor serial).

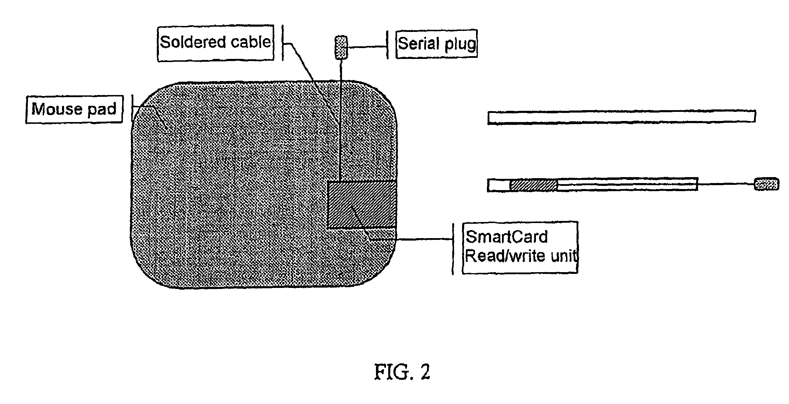

Fig. 2 shows an embodiment of a unit according to the invention. The ScardPad consists of a conventional mouse pad, made in three layers, a SmartCard read/write unit, a cable with a 9-poled SUB-D plug, an adapter and a USB plug. The read/write unit is embedded in the intermediate layer (foam rubber) of the mouse pad, and the cable soldered thereon is passed out to the rear side of the mouse pad in a channel in the foam rubber. The product development phase will show whether the foam rubber layer is to be formed by moulding or by cutting.

A non-skid rubber backing is glued on the base of the pad, and a top layer provided with advertising prints is glued on the top. This layer is to give the correct friction against the navigation ball of the mouse.

Although a preferred embodiment of the present invention has been described and shown, the invention is not restricted to it, but may also be embodied in other ways within the subject-matter defined in the following claims. For example, a unit according to the invention may be adapted to be connected to a computer via its parallel port and communicate with the computer via the port. Further, a unit according to the invention may be used in connection with personal computers, but of course also in connection with other types of computers, as well as computer terminals. Further, a unit according to the invention may be used in connection with other types of cards, such as e.g. cards with magnetic strips.

## Claims

1. A unit which comprises a card read/write device, **characterized in that** the unit is formed by a mouse pad which is adapted to be connected to a computer so that the connection creates a link between the computer and the card read/write device.

2. A unit according to claim 1, **characterized in that** the card read/write device is formed by a SmartCard unit.

## Patentansprüche

1. Einheit, die eine Kartenlese-/Schreibvorrichtung enthält, **dadurch gekennzeichnet, daß** die Einhelt in Gestalt eines Mauspads ausgebildet ist, das dazu eingerichtet ist, an einen Computer derart anceschlossen zu werden, daß der Anschluß eine Verbindung zwischen dem Computer und der Kartenlese-/Schreibvorrichtung erzeugt.

2. Einhelt nach Anspruch 1, **dadurch gekennzeichnet, daß** die Kartenlese/Schreibvorrtchtung in Gestalt einer SmartCard-Einheit ausgebildet ist.

## Revendications

1. Unité comportant un dispositif de lecture / écriture de carte, **caractérisée en ce que** l'unité est composée d'un tapis de souris qui est adapté à être connecté à un ordinateur, de manière à ce que la connexion crée une liaison entre l'ordinateur et le dispositif de lecture / écriture de carte.

2. Unité selon la revendication 1, **caractérisée en ce que** le dispositif de lecture / écriture de carte est constitué par une unité de carte à mémoire (« SmartCard »).
